# EUROPÄISCHE PATENTANMELDUNG

(11) **EP 4 696 507 A1**
(43) Veröffentlichungstag der Anmeldung: **18.02.2026**
(21) Anmeldenummer: 25195538.1
(22) Anmeldetag: 12.08.2025
(51) Int. Cl.: B32B 27/32, B32B 3/08, B32B 5/18, B32B 27/06

(54) **HEIZBARE, LICHTDURCHLÄSSIGE MEHRSCHICHTVERBUNDSTRUKTUR**

(30) Priorität: 14.08.2024 DE 102024207765
(71) Anmelder: Benecke Kaliko AG, 30419 Hannover (DE)
(72) Erfinder: Wolfer, Tim, 30419 Hannover (DE); Nassauer, Benjamin, 30419 Hannover (DE); Schleuniger, Juerg, 30419 Hannover (DE); Kegel, Isabell, 30419 Hannover (DE); Kneer, Janosch, 30419 Hannover (DE); Rösch, Simon, 30419 Hannover (DE); Benz, Nicolai, 30419 Hannover (DE)
(74) Vertreter: Preusser, Andrea

(57) **Zusammenfassung**

Die Erfindung betrifft eine lichtdurchlässige Mehrschichtverbundstruktur (1) für ein Verkleidungselement eines Fahrzeuginnenraums mit einer aus einem transluzenten oder transparenten thermoplastischem Polyolefin (TPO) ausgebildeten Oberschicht (2), aufweisend eine sichtbare Vorderseite (3) und eine Rückseite (4), einer auf der Rückseite (4) angeordneten Maskierungsschicht (5) mit einem lichtdurchlässigen Bereich (14), und einer auf der Maskierungsschicht (5) angeordneten einlagigen oder mehrlagigen Funktionsschicht (6) und einer transluzenten oder transparenten Unterschicht (7), wobei die Funktionsschicht (6) wenigstens eine elektrisch heizbare Lage (8) als eine gedruckte und aushärtend getrocknete elektrisch leitfähige Struktur aufweist.

## Beschreibung

Die Erfindung betrifft eine lichtdurchlässige Mehrschichtverbundstruktur gemäß dem Oberbegriff des Anspruchs 1. Weiterhin betrifft die vorliegende Erfindung ein Verkleidungselement für einen Fahrzeuginnenraum sowie ein Fahrzeug mit einem solchen Verkleidungselement.

Verbundstrukturen in Form von ein- oder mehrschichtigen flexiblen Flächengebilden sind vielfältig bekannt und werden beispielsweise zur Verkleidung von Berührungsflächen in Kraftfahrzeugen, beispielsweise an Sitzflächen, Lenkrädern, Instrumententafeln, Armauflagen und Türverkleidungen verwendet. Diese Flächengebilde umfassen häufig eine Schaumschicht und eine Oberschicht. Sofern diese Flächengebilde beheizt werden sollen, werden standardmäßig Drahtheizungen eingesetzt, d. h. im Bereich eines aus dem Flächengebilde erstellten Bezugs oder darunterliegend werden Drähte eingearbeitet, die bei Beaufschlagung mit elektrischem Strom als Widerstandsheizung arbeiten und sich erwärmen. Des Weiteren kommen Heizfolien zum Einsatz, die jedoch relativ steif sind, was dem Komfort abträglich ist. Mit vergleichbaren Aufbauten können auch Sensoren und andere elektrische Funktionselemente realisiert werden. Diese vorgenannten Funktionselemente vermindern den Sitzkomfort bzw. den haptischen Komfort und müssen durch eine zusätzliche Schaumschicht abgepolstert werden. Eine Schaumschicht zwischen dem Heizelement und der zu beheizenden Oberfläche vermindert jedoch die Heizleistung und bewirkt, dass die gewünschte Erwärmung nur zeitverzögert erreicht werden kann. Ein weiterer Nachteil besteht darin, dass die Drähte üblicherweise mit verhältnismäßig großem Abstand verlegt werden, wodurch warme und kalte Regionen an der Oberfläche des mehrschichtigen Verbundmaterials entstehen können, was außerordentlich unerwünscht ist.

Zusätzlich können Beleuchtungsfunktionen in die Oberflächen integriert werden, wodurch bedarfsweise Informationen, Schalt- oder Bedienflächen durch Symbole, Piktogramme oder Schriftzeichen auf der Oberfläche optisch hervorgehoben werden können. Des Weiteren kann eine Beleuchtung zu dekorativen Zwecken in Form einer Ambientebeleuchtung erfolgen. Die Beleuchtung soll hierbei scharfe Konturen aufweisen und im ausgeschalteten Zustand nicht sichtbar sein. Der qualitativ hochwertige optische Eindruck einer gleichmäßigen Oberfläche der Verkleidungselemente soll durch die Heizfunktion außerdem nicht beeinträchtigt werden.

Aus der EP 1 924 125 B1 ist es bekannt, eine Polymerschicht auf Basis von Polyurethan oder PVC durch Zugabe von leitfähigen Additiven, zum Beispiel Nanotubes, Silber, ionischen Flüssigkeiten, Graphitpartikeln und/oder Kupferpartikeln in das pastenförmige Kunststoffmaterial vor Ausbildung der Schicht elektrisch leitfähig auszurüsten, um diese nach Ausbildung der Schicht mittels Stromdurchfluss unmittelbar elektrisch zu beheizen. Allerdings müssen in einem solchen Fall entsprechend hohe Füllgrade der leitfähigen Additive realisiert werden, um ausreichende Leitfähigkeit zur Erzeugung der erwünschten Erwärmung zu erreichen. Ein hoher Füllgrad beeinflusst jedoch die Flexibilität negativ, sodass einer Anwendung bei Oberflächen im Fahrzeuginnenraum Grenzen gesetzt sind.

Die DE 10 2020 215 949 A1 betrifft ein Verfahren zur Herstellung einer elektrisch heizbaren Schicht aus einem pastenförmigen Kunststoffmaterial, wobei in das Kunststoffmaterial ferner ein Kontaktierungsadditiv hineindispergiert wird, wodurch die elektrisch heizbare Schicht einfacher und zuverlässiger elektrisch kontaktierbar ist. Das pastenförmige Kunststoffmaterial kann in einem Druckverfahren auf das Trägermaterial appliziert werden, wodurch zum Beispiel Strukturen in Form von Leiterbahnen zur Stromzufuhr der elektrisch heizbaren Schicht gebildet werden können.

Aus der EP 3085198B1 ist darüber hinaus ein elektrisch heizbares Flächenelement für einen Fahrzeugsitz bekannt, bei der auf eine elektrisch nichtleitende Trägerschicht eine elektrisch leitfähige und als Widerstandsheizung ausgebildete Beschichtung aufgebracht wird, die von einer elektrisch leitfähigen Paste gebildet wird, welche auf die Trägerschicht aufgedruckt wird. Dabei wird ein festes Druckmuster in Form einer Netz- oder Gitterstruktur verwendet, um ein universelles und als Rollenware bereitgestelltes Flächenelement zu erhalten, welches nach Zuschnitt und entsprechender Kontaktierung mittels Elektroden als Heizung einsetzbar wird. Dieses bekannte Flächenelement kann beispielsweise unterhalb eines aus einem Kunstleder gebildeten Bezuges angeordnet werden.

Folien aus thermoplastischem Polyolefin (TPO) erfüllen die haptischen, optischen und technischen Anforderungen an Oberflächen für Verkleidungselemente von Fahrzeuginnenräumen besonders gut. Insbesondere in der Anwendung als transluzente Folien weisen TPO Folien eine hohe Farbstabilität auf, da die Polymermatrix nicht zu Verfärbungen neigt. Aufgrund der Polarität und einer niedrigen Oberflächenenergie des TPO Materials haften Drucktinten nur schlecht auf einem Substrat aus TPO.

Der Erfindung liegt daher die Aufgabe zugrunde, eine lichtdurchlässige Mehrschichtverbundstruktur für ein Verkleidungselement eines Fahrzeuginnenraums bereitzustellen, wobei eine Oberschicht aus einem lichtdurchlässigen thermoplastischem Polyolefin mit einer gedruckten, heizbaren Funktionsschicht kombinierbar ist, wobei die Haftung der gedruckten, heizbaren Funktionsschicht in der Mehrschichtverbundstruktur verbessert wird.

Die Lösung dieser Aufgabe ergibt sich durch eine lichtdurchlässige Mehrschichtverbundstruktur mit den Merkmalen des unabhängigen Anspruchs 1. Weitere vorteilhafte Ausbildungen sind in den abhängigen Ansprüchen offenbart. Weitere Lösungen der vorliegenden Aufgabe ergeben sich durch ein Verkleidungselement für einen Fahrzeuginnenraum gemäß Anspruch 7, sowie durch ein Fahrzeug nach Anspruch 8.

Weitere Vorteile und Merkmale sind der allgemeinen Beschreibung sowie den Ausführungsbeispielen zu entnehmen.

Die vorliegende Anmeldung betrifft eine lichtdurchlässige Mehrschichtverbundstruktur für ein Verkleidungselement eines Fahrzeuginnenraums mit einer aus einem transluzenten oder transparenten thermoplastischem Polyolefin (TPO) ausgebildeten Oberschicht, aufweisend eine sichtbare Vorderseite und eine Rückseite, einer auf der Rückseite angeordneten Maskierungsschicht mit einem lichtdurchlässigen Bereich, und einer auf der Maskierungsschicht angeordneten einlagigen oder mehrlagigen Funktionsschicht und einer transluzenten oder transparenten Unterschicht, wobei die Funktionsschicht wenigstens eine elektrisch heizbare Lage als eine gedruckte und aushärtend getrocknete elektrisch leitfähige Struktur aufweist.

Transparenz bedeutet in dem Kontext dieser Anmeldung eine vollständige Lichtdurchlässigkeit. Transluzenz steht für eine teilweise Lichtdurchlässigkeit. Opake Materialien sind vollständig lichtundurchlässig.

Auf besonders vorteilhafte Weise beträgt die Lichtdurchlässigkeit der transluzenten Oberschicht und bzw. oder der transluzenten Unterschicht 1 % bis 50 % in einem Wellenlängenbereich für sichtbares Licht zwischen 400 nm bis 780 nm oder in einem Wellenlängenbereich für infrarotes Licht zwischen 780 nm bis 10.000 nm, besonders bevorzugt in einem Wellenlängenbereich für kurzwelliges infrarotes Licht in einem Wellenlängenbereich zwischen 780 nm bis 1400 nm. Alternativ kann die Oberschicht oder die Unterschicht auch transparent für sichtbares Licht in einem Wellenlängenbereich für sichtbares Licht zwischen 400 nm bis 780 nm oder in einem Wellenlängenbereich für infrarotes Licht zwischen 780 nm bis 10.000 nm, besonders bevorzugt in einem Wellenlängenbereich für kurzwelliges infrarotes Licht in einem Wellenlängenbereich zwischen 780 nm bis 1400 nm sein.

Die Maskierungsschicht kann als Haftvermittler zu einer Verbesserung der Haftung der Funktionsschicht mit der Oberschicht beitragen. Auf vorteilhafte Weise ist die Funktionsschicht für den Benutzer von der sichtbaren Vorderseite der Mehrschichtverbundstruktur betrachtet nicht erkennbar, da die Funktionsschicht unterhalb der Maskierungsschicht angeordnet ist. Die Funktionsschicht kann vollflächig auf der Maskierungsschicht oder alterativ nur auf einem Teilbereich der Maskierungsschicht ausgebildet sein. Die Maskierungsschicht ist opak bzw. lichtundurchlässig ausgebildet und weist zumindest einen lichtdurchlässigen Bereich zur Darstellung von grafischen Mustern, Symbolen, Piktogrammen oder Schriftzeichen, die bei Hinterleuchtung der Mehrschichtverbundstruktur an der sichtbaren Vorderseite in Erscheinung treten können. Durch das oberflächennahe Anordnen der Maskierungsschicht, die unmittelbar an die Oberschicht angrenzt, können die Konturen der durch die Maskierung gebildeten grafischen Muster, Symbole, Piktogramme oder Schriftzeichen bei Hinterleuchtung der Mehrschichtverbundstruktur besonders klar dargestellt werden. Der lichtdurchlässige Bereich der Maskierungsschicht kann als eine Ausnehmung der Maskierungsschicht ausgebildet sein oder mit einem transparenten oder transluzenten Material gefüllt sein.

Mit anderen Worten ist die Oberschicht von außen sichtbar, sodass die Oberschicht das optische Erscheinungsbild der Verbundstruktur bestimmt. Die Funktionsschicht kann lagenweise auf der Rückseite der Maskierungsschicht mit einer Polymerpaste oder einer Tinte in einem Druckverfahren aufgetragen werden. Die Polymerpaste kann mit elektrisch leitfähigen Additiven, zum Beispiel aus Kohlenstoff oder Silber, versetzt werden. So können elektrisch leitfähige Strukturen, z. B. in Form von Leiterbahnen, die besonders dünn, dehnfähig und biegeflexibel sind, in einem Druckverfahren erzeugt werden. Durch Trocknung erstarrt das pastöse Material und härtet aus, wodurch eine formstabile Lage oder Struktur erhalten bleibt. Auf diese Weise kann durch flächiges Bedrucken auch die elektrisch heizbare Lage erzeugt werden. Die Pasten können durch geeignete Druckverfahren, wie z.B. Siebdruck, auf die Maskierungsschicht aufgebracht werden. Die Schichtstärke der getrockneten Paste sollte vorzugsweise im Bereich 5-30 µm liegen.

Die elektrisch heizbare Lage kann sich bei Stromführung aufgrund des elektrischen Widerstands der elektrisch leitfähigen Struktur erwärmen und so die Verbundstruktur als ein flächiges Widerstandsheizelement erwärmen. Bei einer beispielsweisen Verwendung der heizbaren mehrschichtigen Verbundstruktur als Strahlungsheizer im Innenraum eines Fahrzeugs können an der Oberfläche der Verbundstruktur Temperaturen von über 60°C, um Verbrennungen bei einer Berührung zu vermeiden vorzugsweise nicht mehr als 80 °C erreicht werden.

Zur Regelung der Temperatur kann die Verbundstruktur wenigstens einen Temperatursensor aufweisen. Vorzugsweise ist der Temperatursensor innerhalb der Funktionsschicht angeordnet. Der Temperatursensor ist mit einer Einrichtung zur Regelung der Temperatur der elektrisch heizbaren Lage verbindbar, wodurch auf besonders vorteilhafte Weise ein Überhitzen der mehrschichtigen Verbundstruktur vermieden werden kann. Die Einrichtung zur Regelung der Temperatur kann innerhalb oder außerhalb der mehrschichtigen Verbundstruktur angeordnet sein.

Die Funktionsschicht kann als Alternative zu einem mehrlagigen Aufbau auch einlagig ausgebildet sein, wobei die elektrisch heizbare Lage und ggfs. der Temperatursensor innerhalb einer Lage angeordnet sein können. Mit anderen Worten kann die Funktionsschicht den Temperatursensor aufweisen, wobei der Temperatursensor in der elektrisch heizbaren Lage angeordnet sein kann, was den Vorteil eines sehr kompakten Aufbaus mit sich bringt.

Die Funktionsschicht kann zur Stromversorgung an eine Spannungsquelle angeschlossen werden. Es zeigt sich als besonders vorteilhaft, dass durch Drucken der elektrisch leitfähigen Struktur die hierfür erforderlichen Leiterbahnen bereits innerhalb der Verbundstruktur vorgesehen sein können. Hierdurch kann der Aufwand einer externen Verkabelung der Funktionsschicht verringert werden. Die Leiterbahnen sind stellenweise frei zugänglich und nicht durch die Unterschicht bedeckt, wodurch die Kontaktstellen mit externen Einrichtungen z. B. mit Steck- oder Crimpverbindungen elektrisch leitend verbunden werden können. Die Kontaktierungsposition kann durch entsprechendes Layout der gedruckten Leiterbahnen frei gewählt werden. Besonders vorteilhaft ist es hierbei die Oberschicht um die Bauteilkante herum auf die Rückseite der Unterschicht zu führen und die Steck- oder Crimpverbinder dort im nicht sichtbaren Bereich anbringen zu können. Auch können im Querschnitt u-förmige Crimpverbinder vorgesehen sein, die voneinander beabstandet randseitig an der Verbundstruktur angeordnet sind und die Oberschicht und die Funktionsschicht unter elektrischer Kontaktierung der Funktionsschicht übergreifen.

Die transparente oder transluzente Unterschicht kann ein textiles Gestrick oder Gewirke aufweisen, um der Verbundstruktur ein Maß an Festigkeit zu verleihen oder als ein Polymerschaum ausgebildet sein, um die Verbundstruktur zu unterpolstern bzw. dieser weiche und haptisch angenehme Eigenschaften zu verleihen. Hinter der Unterschicht kann eine Beleuchtungseinheit angeordnet sein. Das durch die Beleuchtungseinheit emittierte Licht kann zumindest teilweise durch die Unterschicht und die Oberschicht durch die Mehrschichtverbundstruktur hindurchtreten. Das Licht kann sich innerhalb der Unterschicht zudem diffus flächig verteilen, sodass das Licht einer punktförmigen Lichtquelle gleichmäßig innerhalb der Mehrschichtverbundstruktur verteilt werden kann.

Gemäß einem weiteren Aspekt der vorliegenden Erfindung weist die Funktionsschicht wenigstens eine Lage mit einer Zuleitung des Temperatursensors als eine gedruckte und aushärtend getrocknete elektrisch leitfähige Struktur auf. Vorzugsweise können nicht mit der elektrisch leitfähigen Paste der elektrisch leitfähigen Struktur bedruckte Bereiche zumindest teilweise mit einem Dielektrikum aus einer elektrisch nicht leitfähigen Paste bedruckt sein, wobei das Dielektrikum eine größere Schichtdicke als die der elektrisch leitfähigen Paste der Zuleitung des Temperatursensors aufweisen kann. Mit anderen Worten können die Leitungen zur Stromversorgung und bzw. oder Datenübertragung des Temperatursensors als gedruckte Leiterbahnen vorliegen. Die Leiterbahnen sind aus der elektrisch leitfähigen Paste gebildet, wobei zumindest angrenzende Bereiche der Leiterbahnen mit der elektrisch nicht leitfähigen Paste bedruckt sind. Der gedruckte elektrisch nicht leitfähige Teilbereich der Lage kann eine größere Schichtdicke aufweisen als der elektrisch leitfähige Teilbereich der Lage, wodurch auf vorteilhafte Weise eine Ausnehmung zur Aufnahme des Temperatursensors bzw. eines Verbindungselements zum Temperatursensor geschaffen werden kann. Der Temperatursensor kann als klassisches oberflächenmontiertes Sensorelement, auch SMD-Bauteil genannt, auf der gedruckten Leiterbahn der Funktionsschicht angeordnet werden. SMD-Bauteile können typischer Weise über eine Löt- oder Klebeverbindung auf einem Substrat, z. B. einer Leiterplatte, angeordnet werden.

Gemäß einem weiteren Aspekt der vorliegenden Erfindung ist der Temperatursensor als eine gedruckte und aushärtend getrocknete elektrisch leitfähige Struktur ausgebildet. Durch die gleichzeitige Kombination der gedruckten Funktionsschicht als Temperatursensor und Heizelement kann die Anzahl der Komponenten, welche ausschließlich die Funktion des Sensors oder eines Heizelements erfüllen würden, reduziert werden. Die elektrisch leitfähige Struktur kann analog zu der elektrisch heizbaren Lage durch eine Polymerpaste mit elektrisch leitfähigen Additiven gedruckt werden. Durch eine höhere Integration der Einzelkomponenten kann ein Beitrag zu einer kostengünstigen Systemauslegung geleistet werden, der sich insbesondere durch eine vereinfachte Montage aufgrund einer reduzierten Anzahl von zu montierenden Einzelkomponenten erzielen lässt.

Gemäß einem weiteren Aspekt der vorliegenden Erfindung weist die Funktionsschicht wenigstens eine Lage eines Dielektrikums auf, wobei das Dielektrikum zwischen der elektrisch heizbaren Lage und dem Temperatursensor angeordnet ist. Die elektrisch heizbare Lage und der Temperatursensor können auf vorteilhafte Weise durch das Dielektrikum konstruktiv und funktional voneinander getrennt werden. Auch können durch das Drucken von Strukturen aus elektrisch leitfähigem Material und elektrisch isolierendem Material weitere flexible Sensoren, z. B. in Form kapazitiver Drucksensoren, erzeugt und in der Funktionsschicht angeordnet werden. Ein Anordnen von Sensoren kann so unterhalb der Oberschicht erfolgen, ohne dass der optische und haptische Eindruck der sichtbaren Vorderseite der Oberschicht durch starre und lokal angeordnete Elektronikkomponenten negativ beeinflusst wird. Das Dielektrikum kann wie die Funktionsschicht ausschließlich unterhalb der Maskierungsschicht angeordnet sein, um die Lichtdurchlässigkeit der Mehrschichtverbundstruktur nicht weiter einzuschränken.

Eine weitere vorteilhafte Ausbildung der vorliegenden Erfindung sieht vor, dass die transparente oder transluzente Unterschicht aus einem Polymerschaum gebildet ist. Der Polymerschaum kann aus Polyvinylchlorid-, Polyolefin- oder Polyurethanschaum ausgebildet sein. Der Polymerschaum kann zur Herstellung eines Haftverbunds mit der Funktionsschicht gegebenenfalls eine Haftvermittlungsschicht aufweisen.

Die erfindungsgemäße Mehrschichtverbundstruktur ist in einem Thermoformprozess verarbeitbar. Besonders vorteilhaft ist die Kombination einer Oberschicht aus Polyolefinen mit leitfähigen Schichten aus dehnbaren leitfähigen Pasten mit einem Polyolefinschaum als Unterschicht. Ein solcher Aufbau kann mit einem Thermoformprozess auf einen Bauteilträger kaschiert werden und bildet eine weiche, funktionale und dekorative Oberfläche.

Die Anmeldung betrifft außerdem ein Verkleidungselement für einen Fahrzeuginnenraum, aufweisend eine erfindungsgemäße Mehrschichtverbundstruktur. Die Verbundstruktur kann beispielsweise als Verkleidungselement für Armaturenträger, Armlehnen oder Türverkleidungen eines Fahrzeuginnenraums verwendet werden. Die zuvor erläuterten Eigenschaften und Vorteile der erfindungsgemäßen Mehrschichtverbundstruktur sind auf ein Verkleidungselement entsprechend übertragbar.

Die zuvor genannten Eigenschaften und Vorteile lassen sich gemäß einem weiteren Aspekt der vorliegenden Erfindung auch auf ein Fahrzeug mit einem erfindungsgemäßen Verkleidungselement übertragen.

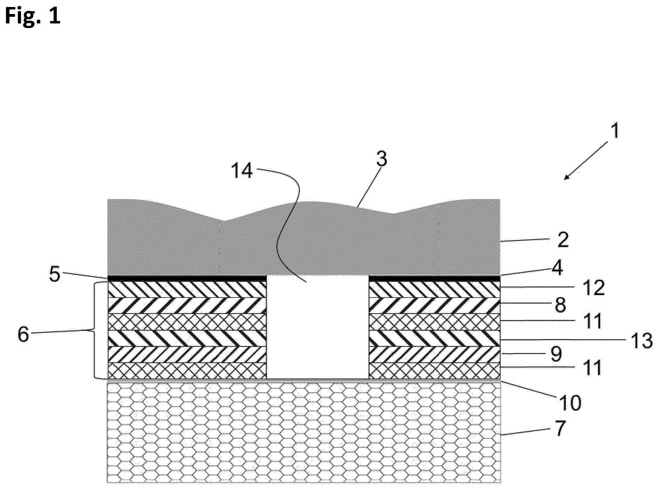

Anhand der Figur 1 wird im Folgenden ein Ausführungsbeispiel der Erfindung schematisch dargestellt und näher erläutert. Dabei zeigt Fig. 1 eine schematische Darstellung einer erfindungsgemäßen Mehrschichtverbundstruktur gemäß eines Ausführungsbeispiels in einer Schnittdarstellung.

Die Fig. 1 zeigt eine schematische Darstellung einer erfindungsgemäßen Mehrschichtverbundstruktur 1 mit einer transluzenten Oberschicht 2 aus thermoplastischem Polyolefin, aufweisend eine sichtbare Vorderseite 3 und eine Rückseite 4, wobei die Rückseite 4 eine lichtundurchlässige Maskierungsschicht 5 mit einem lichtdurchlässigen Bereich 14 aufweist. Rückseitig der Maskierungsschicht 5 ist eine Funktionsschicht 6 und eine transluzente Unterschicht 7 angeordnet. Die sichtbare Vorderseite 3 weist eine reliefartige Oberflächenstruktur in Form einer Narbung auf, wie es typischer Weise bei einer Oberflächenfolie der Fall ist. Die Funktionsschicht 6 ist lagenweise aufgebaut, wobei die einzelnen Lagen in einem Druckverfahren aus elektrisch leitfähigen und elektrisch nicht leitfähigen Pasten aufgebaut sind. Nach dem Drucken trocknen die Pasten und bilden einen formstabilen Schichtverbund. Die Funktionsschicht 6 weist eine elektrisch heizbare Lage 8 auf, die über eine Zuleitung 12 mit Strom versorgt wird. Durch den inneren Widerstand der elektrisch leitfähigen Lage 8 ist diese bei Stromfluss beheizbar, sodass die Mehrschichtverbundstruktur 1 als Flächenheizelement zum Beheizen von Oberflächen im automobilen Innenraum verwendet werden kann. Eine elektrisch nicht leitfähige bzw. elektrisch isolierende Lage wird aus einem Dielektrikum 11 gebildet, das die elektrisch heizbare Lage 8 von einer Zuleitung 13 für einen Temperatursensor 9 elektrisch isoliert. Die Zuleitung 13 für den Temperatursensor 9 steht in elektrisch leitfähigen Kontakt zu dem Temperatursensor 9 und dient sowohl zur Energieversorgung des Temperatursensors 9 als auch zur Übertragung von Sensordaten des Temperatursensors 9 an eine nicht näher dargestellte Einrichtung zur Regelung der Temperatur der elektrisch heizbaren Lage 8. Die Lage des Temperatursensors 9 grenzt auf der der Zuleitung 13 gegenüberliegenden Seite wiederum an eine weitere Lage des Dielektrikums 11 an. Die Funktionsschicht 6 ist auf der Maskierungsschicht 5 haftfest angeordnet. Auf die Funktionsschicht 6 ist die transluzente Unterschicht 7 aus Polymerschaum mit Hilfe einer zusätzlichen Haftvermittlerschicht 10 aufkaschiert. Die Mehrschichtverbundstruktur 1 ist insgesamt lichtdurchlässig, sodass bei rückwärtiger Hinterleuchtung der Mehrschichtverbundstruktur 1 Licht durch die Unterschicht 7, den lichtdurchlässigen Bereich 14 der Maskierungsschicht 5 und die transluzente Oberschicht 2 auf die sichtbare Vorderseite 3 der Mehrschichtverbundstruktur 1 geleitet werden kann.

### Bezugszeichenliste (Teil der Beschreibung)

- 1: Mehrschichtverbundstruktur
- 2: Oberschicht
- 3: sichtbare Vorderseite
- 4: Rückseite
- 5: Maskierungsschicht
- 6: Funktionsschicht
- 7: transluzente Unterschicht
- 8: elektrisch heizbare Lage
- 9: Temperatursensor
- 10: Haftvermittler
- 11: Dielektrikum
- 12: Zuleitung der elektrisch heizbaren Lage
- 13: Zuleitung des Temperatursensors
- 14: lichtdurchlässiger Bereich

## Patentansprüche

1. Lichtdurchlässige Mehrschichtverbundstruktur (1) für ein Verkleidungselement eines Fahrzeuginnenraums mit einer aus einem transluzenten oder transparenten thermoplastischem Polyolefin (TPO) ausgebildeten Oberschicht (2), aufweisend eine sichtbare Vorderseite (3) und eine Rückseite (4), einer auf der Rückseite (4) angeordneten Maskierungsschicht (5) mit einem lichtdurchlässigen Bereich (14), und einer auf der Maskierungsschicht (5) angeordneten einlagigen oder mehrlagigen Funktionsschicht (6) und einer transluzenten oder transparenten Unterschicht (7), wobei die Funktionsschicht (6) wenigstens eine elektrisch heizbare Lage (8) als eine gedruckte und aushärtend getrocknete elektrisch leitfähige Struktur aufweist.

2. Mehrschichtverbundstruktur (1) nach Anspruch 1,
**dadurch gekennzeichnet, dass**
die Verbundstruktur (1) wenigstens einen Temperatursensor (9) aufweist, wobei der Temperatursensor (9) mit einer Einrichtung zur Regelung der Temperatur der elektrisch heizbaren Lage (8) verbindbar ist.

3. Mehrschichtverbundstruktur (1) nach einem der Ansprüche 1 oder 2,
**dadurch gekennzeichnet, dass**
die Funktionsschicht (6) wenigstens eine Lage mit einer Zuleitung eines Temperatursensors (13) als eine gedruckte und aushärtend getrocknete elektrisch leitfähige Struktur aufweist.

4. Mehrschichtverbundstruktur (1) nach einem der Ansprüche 2 oder 3,
**dadurch gekennzeichnet, dass**
der Temperatursensor (9) als eine gedruckte und aushärtend getrocknete elektrisch leitfähige Struktur ausgebildet ist.

5. Mehrschichtverbundstruktur (1) nach einem der Ansprüche 2 bis 4,
**dadurch gekennzeichnet, dass**
die Funktionsschicht (6) wenigstens eine Lage eines Dielektrikums (11) aufweist, wobei das Dielektrikum (11) zwischen der elektrisch heizbaren Lage (8) und dem Temperatursensor (9) angeordnet ist.

6. Mehrschichtverbundstruktur (1) nach einem der Ansprüche 1 bis 5,
**dadurch gekennzeichnet, dass**
die Unterschicht (7) aus einem Polymerschaum gebildet ist.

7. Verkleidungselement für einen Fahrzeuginnenraum, aufweisend eine Mehrschichtverbundstruktur (1) nach einem der Ansprüche 1 bis 6.

8. Fahrzeug mit einem Verkleidungselement nach Anspruch 7.
